(19) **Europäisches Patentamt**
European Patent Office
Office européen des brevets

(11) **EP 1 346 169 B1**

(12) **EUROPÄISCHE PATENTSCHRIFT**

(45) Veröffentlichungstag und Bekanntmachung des Hinweises auf die Patenterteilung:
**19.09.2007 Patentblatt 2007/38**

(21) Anmeldenummer: **01272003.3**

(22) Anmeldetag: **12.12.2001**

(51) Int Cl.:
*F16H 59/02* *(2006.01)*   *G05G 25/04* *(2006.01)*

(86) Internationale Anmeldenummer:
**PCT/EP2001/014612**

(87) Internationale Veröffentlichungsnummer:
**WO 2002/052177 (04.07.2002 Gazette 2002/27)**

(54) **VERSCHIEBBARE SPALTABDECKUNG IM STELLBEREICH EINES GETRIEBEWÄHLHEBELS**

DISPLACEABLE GAP COVER IN THE SETTING RANGE OF A GEARBOX SELECTOR LEVER

SYSTEME DE RECOUVREMENT D'INTERSTICE DEPLA ABLE SITUE DANS LA ZONE DE PASSAGE DE VITESSE D'UN LEVIER DE VITESSE

(84) Benannte Vertragsstaaten:
**DE ES FR GB IT SE**

(30) Priorität: **22.12.2000 DE 10064684**

(43) Veröffentlichungstag der Anmeldung:
**24.09.2003 Patentblatt 2003/39**

(73) Patentinhaber: **AUDI AG**
**85045 Ingolstadt (DE)**

(72) Erfinder: **WANINGER, Robert**
**85055 Ingolstadt (DE)**

(74) Vertreter: **Mader, Wilfried**
**AUDI AG,**
**Patentabteilung**
**85045 Ingolstadt (DE)**

(56) Entgegenhaltungen:
**EP-A- 0 571 654      EP-A- 0 718 528**
**DE-A- 19 649 745      DE-U- 7 117 022**
**FR-A- 2 739 655**

Printed by Jouve, 75001 PARIS (FR)

**Beschreibung**

Die Erfindung betrifft eine verschiebbare Spaltabdeckung im Stellbereich eines Getriebewählhebels. Eine derartige verschiebbare Spaltabdeckung ist aus der DE 44 45 925 C1 bekannt.

Bei der aus der DE 44 45 925 C1 bekannten Spaltabdeckung sind die beiden Seitenränder in Verschieberichtung jeweils in einer Führung zwischen zwei Führungsflächen geführt. Zur Sicherstellung eines ständigen Führungskontakts sind diese Führungen und die Endbereiche der flexiblen Spaltabdeckung gekrümmt ausgebildet, wobei die Krümmung der Spaltabdeckung und die der Führungen unterschiedlich stark ausgeprägt sind. Hierdurch erfolgt zwar eine gesicherte Führung im Bereich der beiden in Verschieberichtung gerichteten Enden der Spaltabdeckung, jedoch lediglich lokal in dem engen Bereich der gekrümmten Führungen. Zwischen diesen gekrümmten Führungsbereichen ist lediglich eine Auflagefläche vorgesehen, so dass in weiten Bereichen der Führung noch Klappergeräusche der Spaltabdeckung möglich sind. Darüber hinaus unterliegt die Spaltabdeckung sehr undefinierten Reibungseinflüssen im gekrümmten Bereich, da die flexible Abdeckfläche mit ihren Rändern nur auf Grund unterschiedlicher Krümmungsradien über mehr oder weniger groß ausgebildete Bereiche nahezu vollständig an den Führungsflächen anliegt.

Aus der DE 196 49 745 A1 ist eine verschiebbare Spaltabdeckung im Stellbereich eines Getriebewählhebels nach dem Oberbegriff des Anspruchs 1 bekannt, bei der verschiedene metallische Klemmelemente an einem Steg an den Längsrändern eines Verkleidungsteils befestigt sind, wobei die metallischen Klemmelemente in relativ großen Abständen zueinander angeordnet sind und an ihrer zur Spaltmitte hin gerichteten Seite U-förmige Führungsnuten aufweisen. Das flexible Flächenmaterial der Spaltabdeckung ist in diesen U-förmigen Führungsnuten mit seinen elastischen Rändern sowohl an der Oberseite als auch an der Unterseite geführt. Die metallischen Klemmelemente sind dabei ortsfest zum Verkleidungsteil und üben einen Führungskontakt jeweils sowohl von der Oberseite als auch von der Unterseite auf das flexible Material der Spaltabdeckung aus. Unterschiedliche Führungserfordernisse in unterschiedlichen, in Verschieberichtung des flexiblen Spaltabdeckungsmaterials erforderlichen Abschnitten können hierdurch nur eingeschränkt berücksichtigt werden. Der Kontakt sowohl von oben als auch von unten auf die flexible Spaltabdeckung erzeugt beidseitig eine erhöhte Reibung und erfordert andererseits dennoch ausreichendes Spiel zwischen den Führungsflächen und der dazwischen geführten Spaltabdeckung.

Der vorliegenden Erfindung liegt die Aufgabe zugrunde, eine verschiebbare Spaltabdeckung im Stellbereich eines Getriebewählhebels zu schaffen, bei der trotz geringer Reibung in einfacher Weise eine sichere Führung ermöglicht wird.

Erfindungsgemäß gelöst wird die Aufgabe durch die Ausbildung einer verschiebbaren Spaltabdeckung im Stellbereich eines Getriebewählhebels gemäß den Merkmalen des Patentanspruchs 1.

Die Ausbildung der Gleitschlitten an den beiden parallelen in Verschieberichtung ausgerichteten Seitenrändern ermöglicht eine Verteilung der Führungskontakte entsprechend den individuellen Anforderungen der flexiblen Abdeckfläche. Da die Gleitschlitten jeweils nur zu einer der beiden Führungsflächen Kontakt haben, kann die Zahl der Kontaktflächen zwischen der flexiblen Abdeckfläche und den Führungsflächen und damit die Reibung trotz ausreichender Führungskontakte in Verschieberichtung reduziert werden. Die Kontaktflächen zwischen der flexiblen Abdeckfläche und den Führungsflächen an der Oberseite und der Unterseite der verschiebbaren Spaltabdeckung können unterschiedlich den individuellen Erfordernissen der verschiebbaren Spaltabdeckung entsprechend ausgebildet werden, so dass ein individuell gewünschtes Biegeverhalten der flexiblen Abdeckfläche entlang dem Führungsweg auf Grund der unterschiedlichen Reibungskräfte an der Oberseite oder Unterseite zusätzlich unterstützt werden kann. Darüber hinaus kann durch die jeweils nur eine Kontaktfläche an einer bestimmten Position der flexiblen Abdeckfläche das Spiel eingeengt und eine definierte spielfreie Führung gewährleistet werden.

Vorteilhafte Ausgestaltungen sind in den weiteren Patentansprüchen beschrieben.

Durch Mittel zur Erzeugung einer Kraft wird die jeweilige Kontaktfläche der Gleitschlitten elastisch vorgespannt in gleitendem Berührkontakt zur korrespondierenden Führungsfläche gehalten und hierdurch eine zusätzliche Verbesserung des definierten spielfreien Führungskontakts ermöglicht, wodurch die Entstehung von Geräuschen beim Verschieben der Spaltabdeckung zusätzlich reduziert wird und eine sichere spielfreie Führung trotz geringer Reibung zusätzlich in einfacher Weise verbessert wird.

Vorzugsweise ist die flexible Abdeckfläche im montierten Zustand mit einer solchen Bogenspannung versehen, dass die Bogenspannung die Gleitschlitten elastisch vorspannt und somit die zur sicheren Anlage der Kontaktflächen an die korrespondierenden Führungsflächen erforderliche Vorspannkraft erzeugt. Diese Ausbildung ist sehr einfach mit geringem baulichen Aufwand möglich. Mit nur wenigen Bauteilen ist eine sichere spielfreie Führung mit geringer Reibung möglich.

Vorzugsweise wird durch das weiche Material der flexiblen Abdeckfläche einerseits und durch das weniger weiche Material der Gleitschlitten andererseits eine ausreichende Versteifung des verschiebbaren Teils der Spaltabdeckung bei geringem Gewicht und eine Flexibilität im Bereich der Führungsflächen gewährleistet.

Vorzugsweise wird durch eine einstückige Ausbildung von flexibler Abdeckfläche und Gleitschlitten die Zahl der Bauteile für die verschiebbare Spaltabdeckung gering gehalten und hierdurch die Zahl möglicher Quellen für eine unerwünschte Geräuschentstehung reduziert.

Vorzugsweise wird die Führung durch die mittels Quertraversen versteiften Führungsbereiche bei einfacher Bauweise der verschiebbaren Spaltabdeckung zusätzlich verbessert. Die Ausbildung der Quertraversen und der jeweiligen Gleitschlitten als einstückiges Bauteil ermöglicht eine Minimierung der Bauteilezahl und somit eine einfache Bauweise unter Minimierung von geräuscherzeugenden Quellen. Besonders einfach kann dies durch eine Ausbildung der Quertraverse und der Gleitschlitten aus gleichem Material realisiert werden. Besonders wenn Abdeckfläche, Gleitschlitten und Quertraverse einstückig ausgebildet werden, lässt sich so in einfacher Weise eine sehr zuverlässige, geräuscharme verschiebbare Spaltabdeckung herstellen. Vorzugsweise ist ein Gleitschlitten mit der korrespondierenden Quertraverse über ein Gelenk verbunden. Hierdurch können Unebenheiten in der Führung einfach geräuschminimierend beim Überfahren mit dem Gleitschlitten ausgeglichen werden. Vorteilhafterweise ist das Gelenk dämpfend ausgebildet. Besonders einfach herstellbar sind Gleitschlitten und Quertraversen und Gelenk aus einem Bauteil durch die Ausbildung eines Foliengelenks. Gleitschlitten und Quertraverse und Foliengelenk sind beispielsweise gemeinsam durch Spritzgießen herstellbar.

Der Reibkontakt kann zusätzlich durch eine kalottenförmige Ausbildung der Kontaktflächen minimiert werden.

Vorzugsweise wird in einfacher Weise durch Wechseln der Führung der flexiblen Abdeckfläche von oben nach unten eine sichere Führung bei reduzierter Reibung ermöglicht. Darüber hinaus ist mit einer derartigen Ausbildung in einfacher Weise eine Spannung zwischen den nur zur unteren Führungsfläche Kontaktflächen ausbildenden zweiten Gleitschlitten und den nur zur oberen Führungsfläche Kontaktflächen ausbildenden ersten Gleitschlitten gewährleistbar. Dies ist besonders einfach zu bewerkstelligen, indem die flexible Abdeckfläche durch seine Bogenspannung als Federelement wirkt. Die Bogenspannung dient darüber hinaus zur Versteifung. Die in der flexiblen Abdeckfläche zwischen den zweiten Gleitschlitten erzeugte Bogenspannung dient auch als schwingungstechnische Versteifung, wodurch freie Schwingungen in der flexiblen Abdeckfläche weitgehend vermieden werden können. Unliebsame Geräusche aufgrund solcher Schwingungen können hierdurch zusätzlich reduziert werden.

Vorzugsweise können die ersten Gleitschlitten und die zweiten Gleitschlitten in einer bestimmten Weise angeordnet werden. Eine alternierende Anordnung von ersten Gleitschlitten und zweiten Gleitschlitten ermöglicht eine gleichmäßige Führung mit gleichmäßig verteilter, reduzierter Reibung an beiden Führungsflächen. Durch eine Unregelmäßigkeit in der Anordnung der Gleitschlitten wird eine zusätzliche Geräuschreduzierung ermöglicht, welche durch eine zusätzliche Unregelmäßigkeit in der Verteilung der Gleitschlitten weiter reduziert werden kann.

Vorzugsweise wird durch zusätzlich versteifende Stege eine verschiebbare Spaltabdeckung mit flexibler Abdeckfläche ermöglicht, bei der die Gesamtkontaktfläche zwischen Gleitschlitten und Führungsflächen weiter verringert werden kann. Die zusätzlich versteifenden Stege ermöglichen eine ausreichende Steifigkeit der flexiblen Abdeckfläche, so dass die flexible Abdeckfläche zwischen zwei benachbarten Gleitschlitten mit ausreichender Flexibilität zum Verschieben in Verschieberichtung und zur Erzeugung einer Bogenspannung ausgebildet sein kann, ohne dass sich die flexible Abdeckfläche jedoch um die Verschiebeachse verbiegen kann.

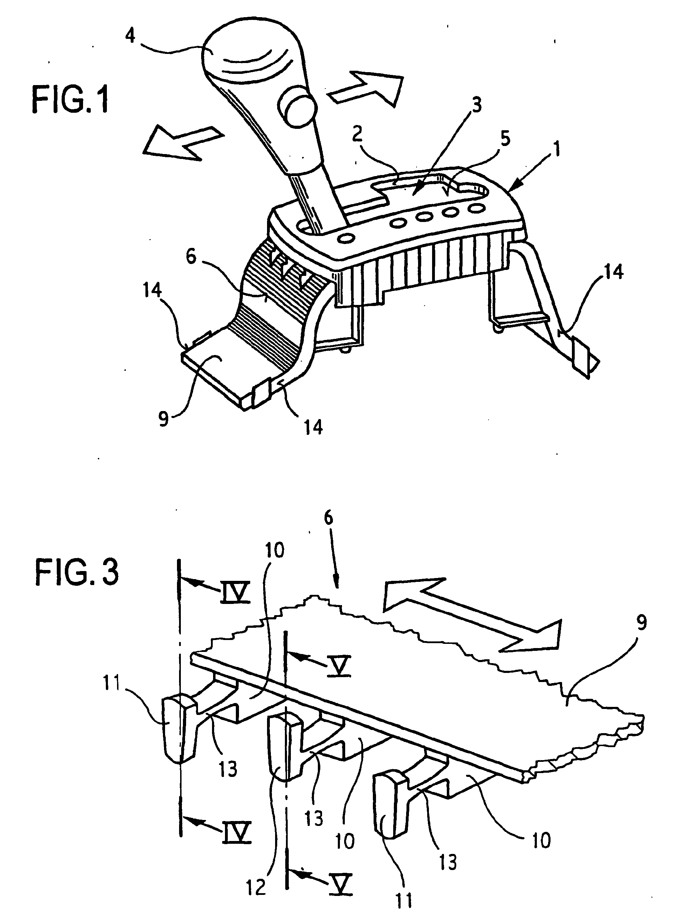

Die Erfindung wird im Folgenden anhand der in den Figuren 1 bis 8 dargestellten Ausführungsbeispiele näher erläutert. Hierbei zeigen:

| | |
|---|---|
| Figur 1 | Eine schematische perspektivische Darstellung eines sich durch ein Schaltgehäuse erstreckenden Getriebeschalthebels mit Spaltabdeckung; |
| Figur 2a und 2b | eine freigelegt dargestellte verschiebbare Spaltabdeckung ohne Darstellung der Führungsflächen, wobei in Figur 2b der hintere Teil der Spaltabdeckung vergrößert in geänderter Perspektive dargestellt ist; |
| Figur 3 | eine vergrößerte Darstellung eines Teilabschnitts des hinteren Abdeckungsbereichs der Spaltabdeckung zur Erläuterung des Aufbaus; |
| Figuren 4a bis 4c | Querschnittsdarstellungen in Figuren 4a und 4b entsprechend dem Schnitt IV-IV von Figur 3 und in Figur 4c entsprechend dem Schnitt V-V von Figur 3, wobei Figur 4a eine Darstellung im unbelasteten nicht montierten Zustand und die Figuren 4b und 4c eine Darstellung im montierten Zustand mit schematisch dargestellter Führungsfläche zeigt; |
| Figuren 5a und 5b | eine Darstellung der montierten Spaltabdeckung im Gehäuse 1 des Schaltstocks, wobei Figur 5a der Querschnittsdarstellung von Figur 4b entspricht und Figur 5b eine Schnittdarstellung gemäß dem Schnitt VI-VI von Figur 5a darstellt; |
| Figuren 6a bis 6d | eine schematische Darstellung von vier Ausführungsformen mit unterschiedlicher Anordnung von Quertraversen und Gleitschlitten; |
| Figuren 7a bis 7c | eine ausschnittsweise Darstellung einer weiteren Ausführungsform mit zusätzlicher Seitenführung; |
| Figur 8 | eine beispielhafte Darstellung einer besonderen Ausführungsform zur Ausbildung der Kontaktfläche eines Gleitschlittens. |

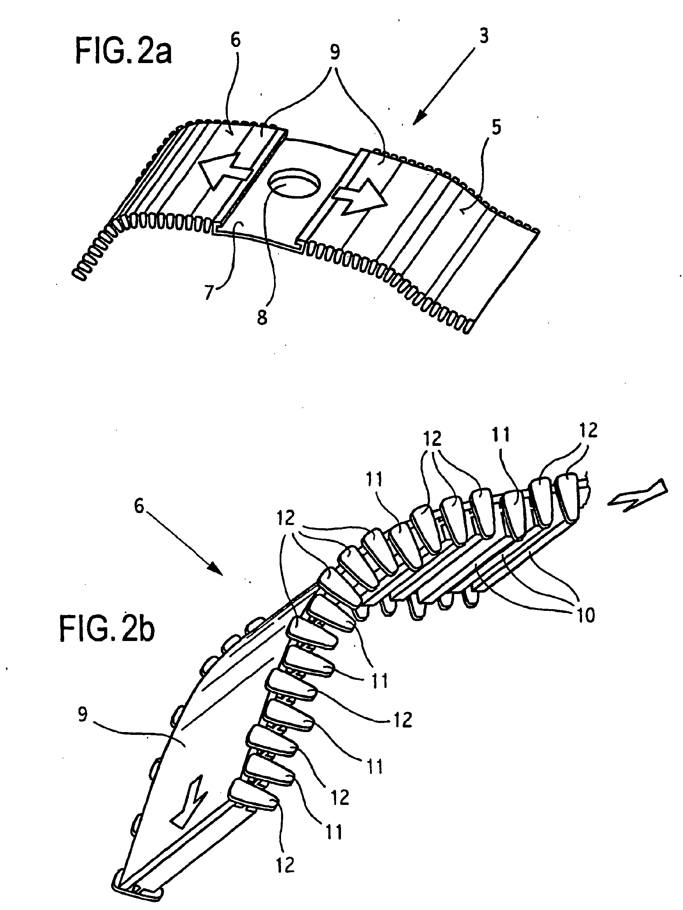

Figur 1 zeigt den äußeren Teil eines Schaltstocks, bei dem ein Gangschalthebel 4 durch einen Spalt 2 des Gehäuses 1 hindurch nach außen erstreckt angeordnet ist. Der Schalthebel 4 ist entsprechend der Pfeildarstellung in Längsrichtung des Spalts 2 verstellbar ausgebildet. In zwei im Gehäuse 1 befestigten, in Verschieberichtung beabstandet zueinander angeordneten parallelen Führungsschienen 14 mit U-förmigem Querschnitt ist eine flexible Spaltabdeckung 3 verschiebbar gelagert. Wie in den Figuren 1, 2a und 2b dargestellt, ist die verschiebbare Spaltabdeckung 3 in einen vorderen Abdeckungsbereich 5 und in einen hinteren Abdeckungsbereich 6 aufgeteilt, zwischen denen eine Platte 7 mit einer Durchgangsöffnung 8 befestigt ist, durch welche im montierten Zustand der Schalthebel 4 hindurchdringt. Durch Verstellen des Schalthebels 4 in Pfeilrichtung von Figur 1 wird über die Platte 7 die verschiebbare Spaltabdeckung 3 in ihren Führungen 14 längs der Pfeilrichtung der Figur 1 bzw. der Figuren 2a und 2b verschoben.

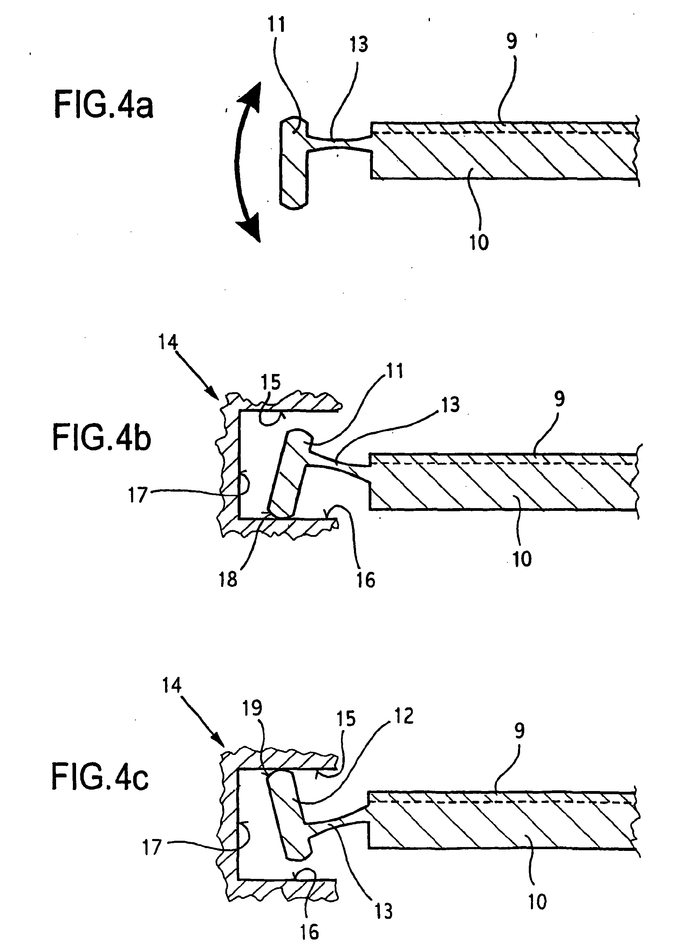

Der vordere Abdeckungsbereich 5 und der hintere Abdeckungsbereich 6 sind in gleicher Weise ausgebildet, so dass die Ausbildung im Folgenden lediglich am Beispiel des hinteren Abdeckungsbereichs 6 beschrieben und in den Figuren 2b und 3 dargestellt ist.

Wie in den Figuren 2a, 2b und 3 erkennbar, ist die verschiebbare Spaltabdeckung 3 an ihrer nach außen sichtbaren Seite als durchgehende, geschlossene, flexible und biegeweiche Abdeckfläche 9 ausgebildet, an deren unterer, zum Getriebe hinweisenden und im eingebauten Zustand nicht sichtbaren Seite in Verschieberichtung voneinander beabstandete und quer zur Verschieberichtung orientierte, sich quer über die Breite der flexiblen Abdeckfläche 9 erstreckende stegförmige Quertraversen 10 befestigt sind. An den beiden seitlichen Rändern ist an den Quertraversen 10 jeweils ein Gleitschlitten 11, 12 befestigt. Dabei sind - wie in den Figuren 4a bis 4c dargestellt - die zweiten Gleitschlitten 11 mit einer unteren Kontaktfläche 18 ausgebildet, welche mit einer in der Führungsschiene 14 ausgebildeten unteren Führungsfläche 16 im montierten Zustand in Kontakt ist. Die ersten Gleitschlitten 12 sind mit einer oberen Kontaktfläche 19 ausgebildet, welche im montierten Zustand mit einer in der Führungsschiene 14 ausgebildeten oberen Führungsfläche 15 in Kontakt ist. Die zweiten Gleitschlitten 11 haben im montierten Zustand keinen Kontakt zur oberen Führungsfläche 15 der Führungsschiene 14, die ersten Gleitschlitten 12 haben im montierten Zustand keinen Kontakt zur unteren Führungsfläche 16 der Führungsschiene 14.

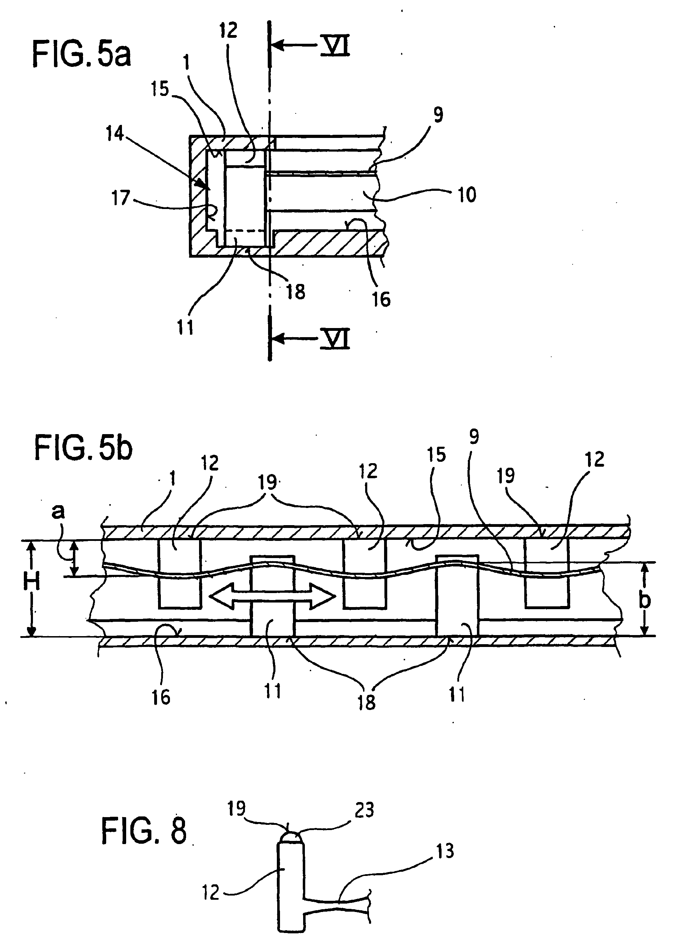

In den Figuren 5a und 5b ist im montierten Zustand der Abstand zwischen der oberen Führungsfläche 15 und der Mittellinie der flexiblen Abdeckfläche 9 im Bereich der Gleitschlitten 12 mit a dargestellt. Der Abstand zwischen der Mittellinie der flexiblen Abdeckfläche 9 und der unteren Führungsfläche 16 im Bereich der Gleitschlitten 11 ist mit b dargestellt. Der Abstand zwischen der oberen Führungsfläche 15 und der unteren Führungsfläche 16 ist mit H dargestellt. Die Gleitschlitten 11, 12 sind dabei so an der flexiblen Abdeckfläche 9 angeordnet, dass für a, b und H gilt:

$$(a + b) > H.$$

Dies kann beispielsweise durch a > H/2 und b > H/2 erreicht werden.

Hierdurch ergibt sich die wellenförmige Ausbildung der flexiblen Abdeckfläche 9 unter Verspannung der flexiblen Abdeckfläche 9 im montierten Zustand. Die hierdurch erzielte Bogenspannung des flexiblen elastischen Materials der flexiblen Abdeckfläche 9 bewirkt die sichere Anlage der zweiten Gleitschlitten 11 an der unteren Führungsfläche 16 und der ersten Gleitschlitten 12 an der oberen Führungsfläche 15 mit der erforderlichen Vorspannung. Die Gleitschlitten 11, 12 werden in Richtung der korrespondierenden Führungsflächen 15, 16 auseinander gedrückt und stehen in sicherem Kontakt zur korrespondierenden Führungsfläche 15, 16.

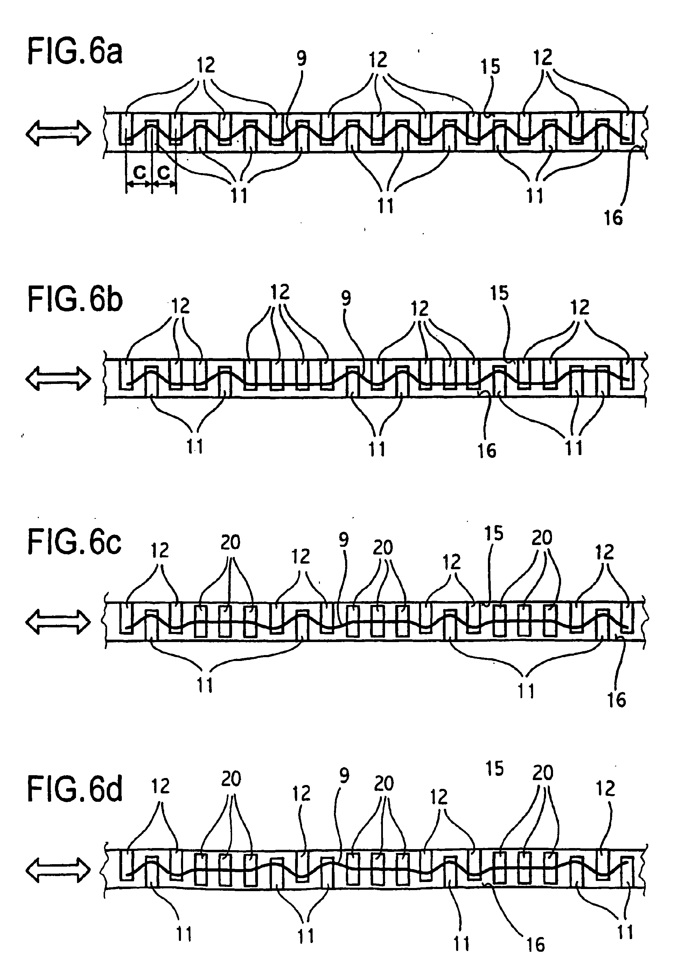

Figur 6a zeigt eine Ausführung, bei der an beiden Seitenrändern der flexiblen Abdeckfläche 9 die Gleitschlitten 11, 12 alternierend angeordnet sind, wobei zwischen zwei benachbarten Gleitschlitten 11, 12 und zwischen zwei benachbarten Kontaktflächen 18, 19 jeweils der gleiche Abstand c eingestellt ist. Obwohl nur im Abstand 2c Reibungskontakt zu einer Führungsfläche 15, 16 vorhanden ist, ist eine stützende Anlage der flexiblen Abdeckfläche 9 jeweils im Abstand c in Verschieberichtung gegeben.

Figur 6b zeigt eine alternative Ausführung, bei der zwischen zwei in Verschieberichtung aufeinander folgenden zweiten Gleitschlitten 11 jeweils ein erster Gleitschlitten 12 oder mehrere erste Gleitschlitten 12 angeordnet sind. Eine solche Ausbildung kann beispielsweise bei Führungen sinnvoll sein, bei denen zu einer Führungsfläche - hier der oberen Führungsfläche 15 - verstärkter Führungskontakt erwünscht ist oder bei denen zu einer Führungsfläche - hier der unteren Führungsfläche 16 - besonders wenig Führungskontakt erwünscht ist.

In einer besonderen Ausbildung ist die Zahl der in Verschieberichtung zwischen zwei jeweils benachbarten zweiten Gleitschlitten 11 angeordneten ersten Gleitschlitten 12 über die Erstreckung in Verschieberichtung unterschiedlich gewählt. Eine gezielte unregelmäßige Verteilung der Anzahl der ersten Gleitschlitten 12 zwischen jeweils zwei in Verschieberichtung benachbarten zweiten Gleitschlitten 11 über den gesamten hinteren Abdeckungsbereich 6 hinweg nach dem Zufallsprinzip kann das Entstehen störender Geräusche weiter vermindern. Diese Ausbildung sollte beispielsweise bei Führungsschienen 14, die besonders beschädigungsanfällig sind, gewählt werden. Durch eine derartige Ausbildung werden beim Übergleiten von Beschädigungsstellen durch die einzelnen Gleitschlitten 11,12 unterschiedliche Schwingungsfrequenzen erzeugt.

Bei der Ausbildung von Figur 6c sind zusätzlich zwischen den Quertraversen 10 mit Gleitschlitten 11, 12 einzelne weitere Quertraversen 20 ohne Gleitschlitten an der flexiblen Abdeckfläche 9 befestigt, wobei die Quertraversen 10 keinen Kontakt zur oberen Führungsfläche 15 oder zur unteren Führungsfläche 16 haben. Eine solche Ausbildung ermöglicht eine gezielte Anordnung entsprechend den individuellen Erfordernissen der verschiebbaren Spaltabdeckung 3. Dabei sind gemäß Darstellung von Figur 6c derartige Quertraversen 20 ohne Gleitschlitten 11, 12 jeweils zwischen zwei Quertraversen 10 mit einem Gleitschlitten 12 und in Figur 6b jeweils zwischen zwei Quertraversen 10 mit unterschiedlichen Gleitschlitten 11, 12, nämlich zwischen einer Quertraverse 10 mit einem zweiten Gleitschlitten 11 und einer Quertraverse 10 mit einem ersten Gleitschlitten 12 ausgebildet.

Die flexible Abdeckfläche 9 ist beispielsweise aus einem bandförmigen Kunststoff- oder Gummimaterial hergestellt. Die Quertraversen 10 bzw. bei Ausbildung gemäß Figur 6c oder 6d auch die Quertraversen 20 sowie die Gleitschlitten 11, 12 sind aus einem demgegenüber härteren Kunststoff- oder Gummimaterial hergestellt. Flexible Abdeckfläche 9, Quertraversen 10 bzw. Quertraversen 20 sowie Gleitschlitten 11, 12 sind dabei einstückig beispielsweise durch ein Mehrkomponenten-Spritzgussverfahren bekannter Art als einstückiges Bauteil hergestellt. Das weiche Material der flexiblen Abdeckfläche 9 besteht beispielsweise aus einem Polytetrafluorethylen, das harte Material von Quertraverse 10 bzw. Quertraverse 20 und Gleitschlitten 11, 12 besteht beispielsweise aus Acrylnitril-Butadien-Styrol-Copolymer.

In einer weiteren Ausführungsform ist - wie in den Figuren 3 und 4 dargestellt - zwischen den Gleitschlitten 11, 12 und der Quertraverse 10 ein Gelenk 13 ausgebildet, so dass die Gleitschlitten 11, 12 jeweils um eine Achse parallel zur Verschieberichtung auf- und abschwenkbar gelagert sind.

In einer weiteren Ausführungsform sind derartige Gelenke 13 federelastisch ausgebildet. Dies ist beispielsweise durch die Ausbildung eines Filmscharniers möglich, wie es in den Figuren 3 und 4a dargestellt ist. Das Filmscharnier 13, die Quertraverse 10 und der am Filmscharnier 13 befestigte Gleitschlitten 11, 12 sind dabei aus einem Material hergestellt. Bei der Herstellung ist darauf zu achten, dass eine gerichtete, in der Spritzform vorgegebene Verformungsrichtung der Führungsflächen 15, 16 gegeben ist. Dies begünstigt die Rückstelleigenschaft unter Belastung und Temperatureinfluss.

Soweit das Filmscharnier 13 im Einzelfall zur Sicherung des Führungskontakts ausreichend flexibel und elastisch ist und die Dämpfungseigenschaft den Anforderungen genügt, kann zur Ausbildung der flexiblen Abdeckfläche 9 ein Material verwendet werden, das etwas weniger weich und dämpfend ist wie bei einer Ausbildung ohne Filmscharnier.

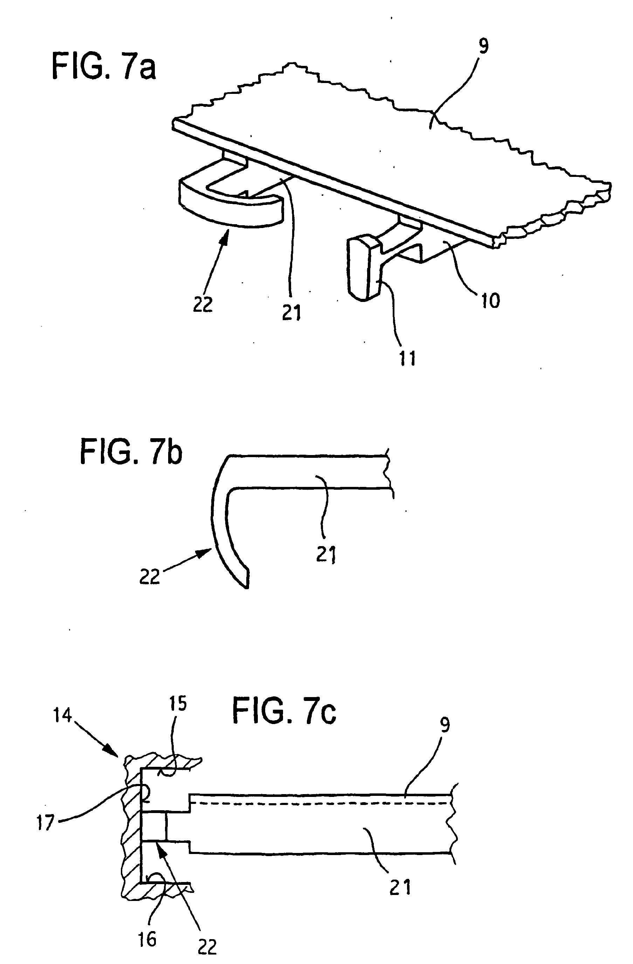

Figur 7 a bis c zeigt eine weitere Ausführungsform, bei der unter der flexiblen Abdeckfläche 9 zusätzliche Quertraversen 21 befestigt sind, die in ihrer seitlichen Verlängerung außerhalb des seitlichen Randes der flexiblen Abdeckfläche 9 einen als Federlasche 22 ausgebildeten seitlichen Endfortsatz ausweisen, der im montierten Zustand in federelastischem Berührkontakt zu einer seitlichen Führungsfläche 17 steht.

Quertraverse 21 und Federlasche 22 sind aus einem gemeinsamen Material hergestellt und zusammen mit der flexiblen Abdeckfläche 9 und den Quertraversen 10 bzw. Quertraversen 20 und den Gleitschlitten 11, 12 als gemeinsames einstückiges Bauteil in bekannter Weise hergestellt, beispielsweise durch Spritzguss. Die Kontaktfläche zwischen Federlasche 22 und seitlicher Führungsfläche 17 sichert in dieser Ausführungsform zusätzlich einen seitlichen vorgespannten Führungszustand.

Die Kontaktfläche der Gleitschlitten 11, 12 zu den korrespondierenden oberen Führungsflächen 15 und unteren Führungsflächen 16 ist in verschiedener Form flächenförmig oder linienförmig möglich. Figur 8 zeigt ein besonderes Ausführungsbeispiel, bei dem die Gleitschlitten 11, 12 - dargestellt an einem ersten Gleitschlitten 12 - an ihrer zur korrespondierenden Führungsfläche weisenden Seite mit einer Kugelkalotte 23 ausgebildet sind. Die Kontaktfläche 19 der Kugelkalotte 23 zur korrespondierenden Führungsfläche 15 ist bei dieser Ausführung nahezu punktförmig ausgebildet.

**BEZUGSZEICHENLISTE**

1    Gehäuse
2    Spalt
3    Spaltabdeckung
4    Schalthebel
5    Vordere Abdeckung
6    hintere Abdeckung
7    Platte
8    Durchgangsöffnung
9    Flexible Abdeckung
10   Quertraverse

11 Gleitschlitten
12 Gleitschlitten
13 Filmscharnier
14 U-förmige Führungsschiene
15 Obere Führungsfläche
16 Untere Führungsfläche
17 Seitliche Führungsfläche
18 Kontaktfläche
19 Kontaktfläche
20 Quertraverse
21 Quertraverse
22 Federlasche
23 Kugelkalotte

**Patentansprüche**

1. Verschiebbare Spaltabdeckung im Stellbereich eines Getriebewählhebels, wobei die verschiebbare Spaltabdeckung (3) als flexible Abdeckfläche (9) ausgebildet ist, die an den beiden in Verschieberichtung liegenden Seitenrändern zwischen einer ersten Führungsfläche (15) und einer zur ersten Führungsfläche (15) parallelen zweiten Führungsfläche (16) gelagert und verschiebbar geführt ist, **dadurch gekennzeichnet,** **dass** an den beiden Seitenrändern der flexiblen Abdeckfläche (9) jeweils mehrere Gleitschlitten (11, 12) als erste Gleitschlitten (12) und zweite Gleitschlitten (11) in Verschieberichtung der Spaltabdeckung (3) beabstandet zueinander angeordnet sind, und **dass** die ersten Gleitschlitten (12) jeweils eine Kontaktfläche (19) zur Herstellung eines gleitenden Berührkontakts lediglich mit der ersten Führungsfläche (15) aufweisen und die zweiten Gleitschlitten (11) jeweils eine Kontaktfläche (18) zur Herstellung eines gleitenden Berührkontakts lediglich mit der zweiten Führungsfläche (16) aufweisen.

2. Spaltabdeckung nach Anspruch 1, **dadurch gekennzeichnet, dass** die Kontaktflächen (18, 19) der ersten Gleitschlitten (12) und zweiten Gleitschlitten (11) durch Mittel zur Erzeugung einer Kraft elastisch vorgespannt in gleitendem Berührkontakt zur jeweiligen Führungsfläche (15, 16) gehalten sind.

3. Spaltabdeckung nach Anspruch 1 oder 2, **dadurch gekennzeichnet, dass** im Betriebszustand der verschiebbaren Spaltabdeckung (3) auf die Gleitschlitten (11, 12) durch krafterzeugende Mittel eine Vorspannkraft mit einer Richtungskomponente senkrecht zur flexiblen Abdeckfläche (9) ausgeübt wird, so dass die Gleitschlitten (11, 12) auseinandergespreizt an der jeweiligen Führungsfläche (15, 16) anliegen.

4. Spaltabdeckung nach Anspruch 2 oder 3, **dadurch gekennzeichnet, dass** die Mittel zur Erzeugung und zur Aufrechterhaltung der Kraft Teil der verschiebbaren Spaltabdeckung (3) sind.

5. Spaltabdeckung nach einem der vorangegangenen Ansprüche, **dadurch gekennzeichnet,** **dass** die Gleitschlitten (11, 12) im montierten Zustand durch eine Bogenspannung der flexiblen Abdeckfläche (9) elastisch vorgespannt gegen die jeweilige Führungsfläche (15, 16) gedrückt sind.

6. Spaltabdeckung nach einem der vorangegangenen Ansprüche, **dadurch gekennzeichnet,** **dass** das Material der flexiblen Abdeckfläche: (9) weicher als das Material der Gleitschlitten (11, 12) ist, und **dass** das Material der flexiblen Abdeckfläche (9) und das Material der Gleitschlitten (11, 12) Kunststoff ist.

7. Spaltabdeckung nach Anspruch 6, **dadurch gekennzeichnet,** **dass** die flexible Abdeckfläche (9) und die Gleitschlitten (11, 12) als einstückiges Bauteil ausgebildet sind.

8. Spaltabdeckung nach einem der vorangegangenen Ansprüche, **dadurch gekennzeichnet,** **dass** die Gleitschlitten (11, 12) an den beiden Seitenrändern der flexiblen Abdeckfläche (9) jeweils an einer über die Breite der flexiblen Abdeckfläche (9) erstreckten Quertraverse (10) angeordnet sind, und **dass** die Gleitschlitten (11, 12) und die jeweilige Quertraverse (10) ein einstückiges, aus dem gleichen Material bestehendes Bauteil bilden.

9. Spaltabdeckung nach Anspruch 8, **dadurch gekennzeichnet,**
**dass** zwischen den Gleitschlitten (11, 12) und der jeweiligen Quertraverse (10) ein Gelenk (13) ausgebildet ist.

10. Spaltabdeckung nach einem der vorangegangenen Ansprüche, **dadurch gekennzeichnet,**
**dass** die Kontaktflächen (18, 19) der Gleitschlitten (11, 12) kalottenförmig ausgebildet sind.

11. Spaltabdeckung nach einem der vorangegangenen Ansprüche, **dadurch gekennzeichnet,**
**dass** zumindest an einem Seitenrand der flexiblen Abdeckfläche (9) zumindest ein Teil der ersten Gleitschlitten (12) jeweils zwischen den zweiten Gleitschlitten (11) angeordnet sind.

12. Spaltabdeckung nach einem der vorangegangenen Ansprüche, **dadurch gekennzeichnet,**
**dass** zumindest an einem Seitenrand der flexiblen Abdeckfläche (9) die ersten Gleitschlitten (12) und die zweiten Gleitschlitten (11) in alternierender Reihenfolge angeordnet sind.

13. Spaltabdeckung nach einem der vorangegangenen Ansprüche, **dadurch gekennzeichnet,**
**dass** zumindest an einem Seitenrand der flexiblen Abdeckfläche (9) die Zahl der ersten Gleitschlitten (12) und die Zahl der zweiten Gleitschlitten (11) über die Verschieberichtung unterschiedlich gewählt ist.

14. Spaltabdeckung nach Anspruch 13, **dadurch gekennzeichnet, dass** zumindest an einem Seitenrand der flexiblen Abdeckfläche (9) die Anordnung der ersten Gleitschlitten (12) über die Verschieberichtung unregelmäßig gewählt ist.

15. Spaltabdeckung nach einem der vorangegangenen Ansprüche, **dadurch gekennzeichnet,**
**dass** zumindest an einem Seitenrand der flexiblen Abdeckfläche (9) zumindest in einzelnen Bereichen zwischen zwei benachbarten Gleitschlitten (11, 12) in einer Ebene senkrecht zur flexiblen Abdeckfläche (9) erstreckte, die Spaltabdeckung (3) versteifende weitere Quertraversen (20) ausgebildet sind, die die Führungsflächen (15, 16) nicht berühren.

16. Spaltabdeckung nach Anspruch 15, **dadurch gekennzeichnet, dass** zumindest an einem Seitenrand der flexiblen Abdeckfläche (9) jeweils drei Gleitschlitten (11, 12) benachbart zueinander ausgebildet sind, und dass zwischen solchen ersten drei benachbarten Gleitschlitten (11, 12) und den in Verschieberichtung nächsten drei Gleitschlitten (11, 12) weitere Quertraversen (20) ausgebildet sind.

17. Spaltabdeckung nach einem der vorangegangenen Ansprüche, **dadurch gekennzeichnet,**
**dass** Mittel (22, 17) zur seitlichen Führung der verschiebbaren Spaltabdeckung (3) vorgesehen sind.

**Claims**

1. Displaceable gap cover in the effective range of a selector lever, in which the displaceable gap cover (3) is designed as a flexible covering surface (9) mounted and displaceably guided at both side edges situated in the direction of displacement between a first guide surface (15) and a second guide surface (16) parallel to the first guide surface (15), **characterised in that** a plurality of slides (11, 12) in the form of first slides (12) and second slides (11) are arranged at a distance from one another in the direction of displacement of the gap cover (3) at both side edges of the flexible covering surface (9) and that the first slides (12) each have a contact surface (19) for producing sliding contact only with the first guide surface (15) and the second slides (11) each have a contact surface (18) for producing sliding contact only with the second guide surface (16).

2. Gap cover according to claim 1, **characterised in that** the contact surfaces (18, 19) of the first slides (12) and second slides (11) are held in sliding contact with the respective guide surfaces (15, 16) in a resiliently pretensioned manner by means for generating a force.

3. Gap cover according to claim 1 or claim 2, **characterised in that** a pretensioning force with a direction component perpendicular to the flexible covering surface (9) is applied to the slides (11, 12) by force-generating means in the operating state of the displaceable gap cover (3), in such a manner that the slides (11, 12) are spread apart and bear against the respective guide surfaces (15, 16).

4. Gap cover according to claim 2 or claim 3, **characterised in that** the means for generating and maintaining the force are part of the displaceable gap cover (3).

**5.** Gap cover according to one of the preceding claims, **characterised in that** the slides (11, 12) are pressed against the respective guide surfaces (15, 16) in a resiliently pretensioned manner in the mounted state by arcuate tensioning of the flexible covering surface (9).

**6.** Gap cover according to one of the preceding claims, **characterised in that** the material of the flexible covering surface (9) is softer than the material of the slides (11, 12) and that the material of the flexible covering surface (9) and the material of the slides (11, 12) is plastic.

**7.** Gap cover according to claim 6, **characterised in that** the flexible covering surface (9) and the slides (11, 12) are designed as a one-piece component.

**8.** Gap cover according to one of the preceding claims, **characterised in that** the slides (11, 12) are each arranged on a cross member (10) extending over the width of the flexible covering surface (9) at the two side edges of the flexible covering surface (9) and that the slides (11, 12) and the respective cross members (10) form a one-piece component consisting of the same material.

**9.** Gap cover according to claim 8, **characterised in that** a hinge (13) is provided between the slides (11, 12) and the respective cross members (10).

**10.** Gap cover according to one of the preceding claims, **characterised in that** the contact surfaces (18, 19) of the slides (11, 12) are dome-shaped.

**11.** Gap cover according to one of the preceding claims, **characterised in that** at least part of each of the first slides (12) is arranged between the second slides (11) at least at one side edge of the flexible covering surface (9).

**12.** Gap cover according to one of the preceding claims, **characterised in that** the first slides (12) and the second slides (11) are arranged in an alternating sequence at least at one side edge of the flexible covering surface (9).

**13.** Gap cover according to one of the preceding claims, **characterised in that** the number of the first slides (12) and the number of the second slides (11) is different over the direction of displacement at least at one side edge of the flexible covering surface (9).

**14.** Gap cover according to claim 13, **characterised in that** the arrangement of the first slides (12) over the direction of displacement is irregular at least at one side edge of the flexible covering surface (9).

**15.** Gap cover according to one of the preceding claims, **characterised in that** further cross members (20) extending in a plane perpendicular to the flexible covering surface (9) and reinforcing the gap cover (3) are provided at least in individual regions between two adjacent slides (11, 12) at least at one side edge of the flexible covering surface (9) and do not contact the guide surfaces (15, 16).

**16.** Gap cover according to claim 15, **characterised in that** three slides (11, 12) are provided adjacent to one another in each case at least at one side edge of the flexible covering surface (9) and that further cross members (20) are provided between the first three adjacent slides (11, 12) of this kind and the next three slides (11, 12) in the direction of displacement.

**17.** Gap cover according to one of the preceding claims, **characterised by** means (22, 17) for laterally guiding the displaceable gap cover (3).

**Revendications**

**1.** Système de recouvrement d'interstice déplaçable situé dans la zone de passage de vitesse d'un levier de vitesses, le recouvrement d'interstice déplaçable (3) étant développé sous forme de surface de recouvrement flexible (9) qui est logée et guidée déplaçable sur les deux bords latéraux situés dans le sens de déplacement entre une première surface de guidage (15) et une seconde surface de guidage (16) parallèle à la première surface de guidage (15),
**caractérisé en ce que**
sur les deux bords latéraux de la surface de recouvrement flexible (9) plusieurs sellettes à glissières (11, 12) sont respectivement disposées sous forme de premières sellettes à glissières (12) et de secondes sellettes à glissières (11) à distance les unes des autres dans le sens de déplacement du recouvrement d'interstice (3) et que les premières sellettes à glissières (12) présentent respectivement une surface de contact (19) pour la production d'un contact coulissant uniquement avec la première surface de guidage (15) et les secondes sellettes à glissières (11) présentent respectivement une surface de contact (18) pour la production d'un contact coulissant uniquement avec la seconde surface de guidage (16).

**2.** Système de recouvrement d'interstice selon la revendication 1, **caractérisé en ce que** les surfaces de contact (18, 19) des premières sellettes à glissières (12) et des secondes sellettes à glissières (11) sont maintenues précontraintes élastiquement en contact coulissant par rapport à la surface de guidage respective (15, 16) grâce à un moyen de génération d'une force.

**3.** Système de recouvrement d'interstice selon la revendication 1 ou 2, **caractérisé en ce que**, en état de fonctionnement du recouvrement d'interstice déplaçable (3), à l'aide de moyens producteurs d'énergie, une force de précontrainte est exercée sur les sellettes à glissières (11, 12) avec un composant de direction verticalement par rapport à la surface de recouvrement flexible (9), de sorte que les sellettes à glissières (11, 12) reposent écartées les unes des autres sur la surface de guidage respective (15, 16).

**4.** Système de recouvrement d'interstice selon la revendication 1 ou 2, **caractérisé en ce que** les moyens de génération et de maintien de la force font partie du recouvrement d'interstice déplaçable (3).

**5.** Système de recouvrement d'interstice selon l'une des revendications précédentes, **caractérisé en ce que** les sellettes à glissières (11, 12) à l'état monté sont pressées par une tension en arc de la surface de recouvrement flexible (9) en étant précontraintes élastiquement contre la surface de guidage respective (15,16).

**6.** Système de recouvrement d'interstice selon l'une des revendications précédentes, **caractérisé en ce que** la matière de la surface de recouvrement flexible (9) est plus souple que la matière des sellettes à glissières (11, 12) et que la matière de la surface de recouvrement flexible (9) et celle des sellettes à glissières (11, 12) est une matière plastique.

**7.** Système de recouvrement d'interstice selon la revendication 6, **caractérisé en ce que** la surface de recouvrement flexible (9) et les sellettes à glissières (11, 12) sont développées sous forme d'une pièce de construction d'un seul tenant.

**8.** Système de recouvrement d'interstice selon l'une des revendications précédentes, **caractérisé en ce que** les sellettes à glissières (11, 12) sur les deux bords latéraux de la surface de recouvrement flexible (9) sont respectivement disposées sur une traverse (10) s'étendant sur la largeur de la surface de recouvrement flexible (9), et que les sellettes à glissières (11, 12) et la traverse respective (10) forment une pièce de construction d'un seul tenant constituée de la même matière.

**9.** Système de recouvrement d'interstice selon la revendication 8, **caractérisé en ce qu'**une articulation (13) est formée entre les sellettes à glissières (11 ,12) et la traverse (10).

**10.** Système de recouvrement d'interstice selon l'une des revendications précédentes, **caractérisé en ce que** les surfaces de contact (18, 19) des sellettes à glissières (11, 12) sont développées sous forme de calottes.

**11.** Système de recouvrement d'interstice selon l'une des revendications précédentes, **caractérisé en ce qu'**au moins sur un bord latéral de la surface de recouvrement flexible (9) au moins une partie des premières sellettes à glissières (12) est disposée entre les secondes sellettes à glissières (11).

**12.** Système de recouvrement d'interstice selon l'une des revendications précédentes, **caractérisé en ce qu'**au moins sur un bord latéral de la surface de recouvrement flexible (9), les premières sellettes à glissières (12) et les secondes sellettes à glissières (11) sont disposées par ordre alternant.

**13.** Système de recouvrement d'interstice selon l'une des revendications précédentes, **caractérisé en ce qu'**au moins sur un bord latéral de la surface de recouvrement flexible (9), le nombre des premières sellettes à glissières (12) et le nombre des secondes sellettes à glissières (11) est choisi de manière variable sur le sens de déplacement.

**14.** Système de recouvrement d'interstice selon la revendication 14, **caractérisé en ce qu'**au moins sur un bord latéral de la surface de recouvrement flexible (9) la disposition des premières sellettes à glissières (12) est choisie de manière irrégulière sur le sens de déplacement.

**15.** Système de recouvrement d'interstice selon l'une des revendications précédentes, **caractérisé en ce que** d'autres traverses (20) sont formées au moins sur un bord latéral de la surface de recouvrement flexible (9) au moins dans des zones individuelles entre deux sellettes à glissières adjacentes (11, 12) s'étendant sur un plan verticalement par rapport à la surface de recouvrement flexible (9), renforçant le recouvrement d'interstice (3) et n'étant pas en contact avec les surfaces de guidage (15 ,16).

**16.** Système de recouvrement d'interstice selon la revendication 16, **caractérisé en ce qu'**au moins sur un bord latéral de la surface de recouvrement flexible (9) respectivement trois sellettes à glissières (11, 12) sont formées en étant adjacentes les unes aux autres
et que d'autres traverses (20) sont formées entre ces trois premières sellettes à glissières (11, 12) et les trois sellettes à glissières suivantes (11, 12) dans le sens de déplacement.

**17.** Système de recouvrement d'interstice selon l'une des revendications précédentes, **caractérisé en ce que** des moyens (22, 17) sont prévus pour le guidage latéral du recouvrement d'interstice déplaçable (3).

FIG.1

FIG.3

# FIG.2a

# FIG.2b

FIG.4a

11  13  9

10

FIG.4b

14  15  11  13  9

17

18  16  10

FIG.4c

14  19  15  12  9

17

13  16  10

FIG.5a

FIG.5b

FIG. 8

FIG.6a

FIG.6b

FIG.6c

FIG.6d

FIG. 7a

FIG. 7b

FIG. 7c

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4445925 C1

- DE 19649745 A1